# EUROPÄISCHE PATENTSCHRIFT

(11) **EP 3 134 254 B1**
(45) Veröffentlichungstag und Bekanntmachung des Hinweises auf die Patenterteilung: **23.07.2025**
(21) Anmeldenummer: 15709168.7
(22) Anmeldetag: 11.03.2015
(51) Int. Cl.: B29C 70/46, B29C 65/48

(54) **VERFAHREN ZUM VERBINDEN VON VERBINDUNGSABSCHNITTEN VON WENIGSTENS ZWEI BAUTEILEN UND BAUGRUPPE**
METHOD FOR JOINING JOINING SECTIONS OF AT LEAST TWO COMPONENTS AND MODULE
PROCÉDÉ POUR RELIER DES PORTIONS D'ASSEMBLAGE D'AU MOINS DEUX PIÈCES STRUCTURALES ET MODULE

(30) Priorität: 22.04.2014 DE 102014207565
(43) Veröffentlichungstag der Anmeldung: 01.03.2017
(73) Patentinhaber: Bayerische Motoren Werke Aktiengesellschaft, 80809 München (DE)
(72) Erfinder: BRAUCH, Michael, 85598 Baldham (DE); SCHNEIDEWIND, Thomas, 80636 München (DE)
(86) Internationale Anmeldenummer: PCT/EP2015/054999
(87) Internationale Veröffentlichungsnummer: WO 2015/161954

(56) Entgegenhaltungen:
- EP-A1- 2 397 312
- EP-A2- 0 436 805
- WO-A1-2007/048408
- DE-A1- 102010 050 874
- DE-A1- 102011 017 007
- GB-A- 1 547 196

## Beschreibung

Die Erfindung betrifft Verfahren zum Verbinden von Verbindungsabschnitten von wenigstens zwei Bauteilen, insbesondere Fahrzeugbauteilen, wobei die Verbindungsabschnitte ausschließlich unter Verwendung einer faserhaltigen, duroplastischen Pressmasse miteinander verbunden werden.

Des Weiteren betrifft die Erfindung Baugruppen mit wenigstens zwei jeweils wenigstens einen Verbindungsabschnitt aufweisenden Bauteilen, insbesondere Fahrzeugbauteilen, wobei die Verbindungsabschnitte ausschließlich über ein Verbindungsbauteil aus einer ausgehärteten faserhaltigen, duroplastischen Pressmasse miteinander verbunden sind.

Insbesondere im Bereich der Automobilherstellung ist es üblich, Bauteile, beispielsweise in Form von Profilen oder Schalen, über eine Klebetechnik miteinander zu verbinden. Zusätzlich können mechanische Verbindungsmittel erforderlich sein, um eine geeignete Verbindung zwischen den Fahrzeugbauteilen herstellen zu können. Zwei als Profile ausgebildete Bauteile können über ein als Knotenschale ausgebildetes Bauteil miteinander verbunden werden, was insbesondere bei Profilen aus einem Faserverbundwerkstoff vorteilhaft bezüglich einer montagebedingten oder betriebsbedingten Krafteinleitung in die Profile ist.

DE 10 2010 050 874 A1 offenbart eine Baugruppe mit Bauteilen, die über ein gegossenes Knotenelement aus einer Aluminium- oder einer Magnesiumlegierung miteinander verbunden sind.

GB 1 547 196 A offenbart eine Baugruppe mit Bauteilen, die entweder ausschließlich über eine Beschichtung aus einem mit Fiberglas verstärkten Polyesterkunstharz oder über ein Verbindungsmaterial, das als selbstaushärtendes Polymersystem aus faserhaltigem Polyester gebildet ist, miteinander verbunden sind.

EP 2 397 312 A offenbart das Verbinden von Bauteilen, wobei um Verbindungsabschnitte der Bauteile sich gegenseitig überlappende Fasermatten gelegt werden, anschließend eine abdichtende Umhüllung um die Fasermatten gelegt wird, dann der Raum zwischen der Umhüllung und den Verbindungsabschnitten druckentlastet wird und zuletzt ein flüssiges Kunstharz in die Umhüllung eingespritzt wird.

WO 2007/048408 A1 offenbart das Verbinden von Bauteilen eines Blatts eines Windrades. Hierzu werden ein fließfähiger Haftstoff und ein poröses Material, beispielsweise ein Fasermaterial, getrennt voneinander zwischen den miteinander zu verbindenden Bauteilen angeordnet und anschließend die Bauteile zusammengeführt, so dass der Haftstoff in das poröse Material eindringt und dieses durchtränkt. Aus dem Verbindungsspalt zwischen den Bauteilen austretender, überflüssiger Haftstoff wird ebenfalls von dem porösen Material aufgenommen, wodurch verhindert werden soll, dass der überschüssige Haftstoff beim Betrieb des Windrads abbricht.

DE 10 2011 017007 A1 offenbart ein Verfahren, welches das Einführen eines Teils einer Befestigungseinheit in eine Werkzeugform beinhaltet. Ein halbfertiges Fasermaterial wird in die Form eingeführt. Der Teil und das Material sind miteinander verbunden. Eine Kunststoffmatrix wird in die Form eingeführt, ein fließender Zustand des Kunststoffs wird der Form bereitgestellt und das Material wird so imprägniert, dass der Teil in den Kunststoff eingebettet und so begrenzt wird, dass das Material gleichzeitig mit einer Faserverbundkomponente verbunden wird. Der Kunststoff ist teilweise ausgehärtet.

Aufgabe der Erfindung ist es, eine einfach zu realisierende Möglichkeit zur Ausbildung von hochwertigen Verbindungen zwischen Bauteilen zu schaffen, mit der konstruktiv komplex ausgebildete Baugruppen herstellbar sind.

Diese Aufgabe wird durch Verfahren gemäß den Patentansprüchen 1 und 2 und Baugruppen gemäß den Patentansprüchen 8 und 9 gelöst. Vorteilhafte Ausgestaltungen sind in den abhängigen Ansprüchen wiedergegeben, welche jeweils für sich genommen oder in verschiedener Kombination miteinander einen Aspekt der Erfindung darstellen können.

Durch die erfindungsgemäße Verbindung der Verbindungsabschnitte der Bauteile können herkömmliche Verbindungstechniken, wie beispielsweise Kleben, Schrauben, Nieten und dergleichen, entfallen. Hierdurch kann eine Ausbildung von an den miteinander zu verbindenden Verbindungsabschnitten angeordneten, für herkömmliche Verbindungstechniken erforderlichen Prozessflächen an den Verbindungsabschnitten entfallen. Zudem müssen nicht die zur Durchführung der herkömmlichen Verbindungstechniken erforderlichen Vorrichtungen verwendet werden. Insgesamt können somit mit den herkömmlichen Verbindungstechniken einhergehende Kosten eingespart werden.

Unter Verwendung der erfindungsgemäßen Verfahren lassen sich zudem konstruktiv komplexere und integrativere Baugruppen aus miteinander verbundenen Bauteilen herstellen, als es der Fall bei Verwendung herkömmlicher Verbindungstechniken ist. Dies ist unter anderem dadurch bedingt, dass bei Verwendung herkömmlicher Verbindungsmethoden einzuhaltende, verbindungsspezifische Gestaltungsregularien, wie beispielsweise ein Vermeiden von scherendem Fügen von Klebeverbindungen, entfallen.

Ein weiterer Nachteil bei herkömmlichen Verbindungstechniken ist, dass materialschädigende schälende Belastungen der Verbindungen in der Regel nicht vermieden werden können. Mit einem Auftreten von solchen schälenden Belastungen sind Steifigkeits- und Festigkeitsverluste der aus Bauteilen mittels herkömmlicher Verbindungstechniken hergestellten Baugruppen verbunden.

Werden die Verbindungsabschnitte dreidimensional und zumindest teilweise formschlüssig von der faserhaltigen, duroplastischen Pressmasse umgriffen, können Verbundfestigkeiten und Verbundsteifigkeiten ausgebildet werden, welche mit herkömmlichen Verbindungstechniken nicht erreichbar sind. Mit den erfindungsgemäßen Verfahren können relativ große Baugruppen aus miteinander verbundenen Bauteilen gebildet werden, indem die Bauteile in einem Schritt miteinander verbunden werden.

Die faserhaltige, duroplastische Pressmasse kann beispielsweise als SMC ("Sheet Molding Compound") ausgebildet sein.

Die miteinander zu verbindenden Bauteile können aus Metall oder einem Faserverbundwerkstoff gebildet sein. Mit den erfindungsgemäßen Verfahren können auch drei oder mehrere Bauteile, insbesondere gleichzeitig, miteinander verbunden werden. Eines der miteinander zu verbindenden Bauteile kann als Knotenbauteil ausgebildet sein, mit dem zwei oder mehrere Bauteile zu verbinden sind.

Die Verbindungsabschnitte werden in gewünschter Relativstellung zueinander in das geöffnete Presswerkzeug eingelegt. Anschließend kann die faserhaltige, duroplastische Pressmasse beispielsweise in Form von SMC in das geöffnete Presswerkzeug im Bereich der miteinander zu verbindenden Verbindungsabschnitte eingelegt werden. Hiernach wird das Presswerkzeug geschlossen und somit kann ein Pressvorgang mit Wärmezufuhr durchgeführt werden. Wahlweise kann die faserhaltige, duroplastische Pressmasse separat vorgeheizt werden, wodurch die Fließeigenschaften der faserhaltigen, duroplastischen Pressmasse verbessert werden, so dass bei dem Pressvorgang geringere Pressdrücke erforderlich sind. Dies verringert das Risiko der Schädigung der Fügepartner, also der Bauteile, beim Pressvorgang durch den jeweilig gegebenen Pressdruck. Beim Schließen des Presswerkzeugs können die Verbindungsabschnitte zumindest teilweise formschlüssig mit der faserhaltigen, duroplastischen Pressmasse umgeben werden. Das Aushärten der faserhaltigen, duroplastischen Pressmasse kann teilweise oder vollständig innerhalb oder außerhalb des Presswerkzeugs erfolgen.

Im Unterscheid zu der zuletzt beschriebenen Ausführungsform kann zuerst die faserhaltige, duroplastische Pressmasse und können anschließend die miteinander zu verbindenden Bauteile in das Presswerkzeug eingelegt werden. Hierbei ist besonders darauf zu achten, dass die Bauteile beim Schließen des Presswerkzeugs nicht beschädigt werden.

Alternativ wird zuerst eine bei geschlossenem Presswerkzeug unter den Verbindungsabschnitten liegende faserhaltige, duroplastische Pressmasse in das Presswerkzeug eingelegt. Anschließend werden die miteinander zu verbindenden Bauteile in das Presswerkzeug eingelegt. Zuletzt wird eine bei geschlossenem Presswerkzeug über den Verbindungsabschnitten liegende faserhaltige, duroplastische Pressmasse in das Presswerkzeug eingelegt, was auch als Deckflächenbelegung mit der faserhaltigen, duroplastischen Pressmasse bezeichnet werden kann. Mit dieser Ausgestaltung ist der Vorteil verbunden, dass die faserhaltigen, duroplastischen Pressmassen nicht so weite Fließwege zur Ausbildung einer gewünschten Verbindung zwischen Bauteilen haben. Insbesondere können hierbei auch solche faserhaltige, duroplastische Pressmassen eingesetzt werden, welche schlechtere Fließeigenschaften aufweisen.

Gemäß einer erfindungsgemäßen Ausgestaltung wird an wenigstens einem Verbindungsabschnitt vor dem Verbinden der Verbindungsabschnitte zumindest eine Kavität ausgebildet. Die faserhaltige, duroplastische Pressmasse kann bei einem Pressvorgang mittels eines Presswerkzeugs in die Kavität fließen, wodurch ein Formschluss zwischen der faserhaltigen, duroplastischen Pressmasse bzw. einem darauf gebildeten Verbindungsbauteil und dem die Kavität aufweisenden Bauteil hergestellt wird, was die Verbindung zwischen den Bauteilen stärkt. An einem Verbindungsabschnitt können auch zwei oder mehrere Kavitäten ausgebildet sein. Es können auch an allen miteinander zu verbindenden Verbindungsabschnitten von Bauteilen entsprechende Kavitäten ausgebildet sein.

Gemäß einer weiteren erfindungsgemäßen Ausgestaltung werden die miteinander zu verbindenden Verbindungsabschnitte derart zueinander angeordnet, dass ein Verbindungsabschnitt von dem damit zu verbindenden Verbindungsabschnitt zumindest teilweise umgeben ist. Hierdurch können sich die Bauteile gegeneinander abstützen.

Vorteilhafterweise wird die Kavität als Durchgangsloch oder Sackloch ausgebildet. Ein Durchgangsloch bietet die Möglichkeit, dass die während eines Pressvorgangs von einer ersten Seite eines Verbindungsabschnitts zu der zweiten Seite des Verbindungsabschnitts durch das Durchgangsloch fließende faserhaltige, duroplastische Pressmasse auf der zweiten Seite aus dem Durchgangsloch austritt und dort die zweite Seite zumindest teilweise umgreift, was die Verbindung zwischen den Bauteilen stärkt. Alternativ können zum Erreichen eines Formschlusses zwischen einem Verbindungsabschnitt und der faserhaltigen, duroplastischen Pressmasse Rippen oder dergleichen an dem Verbindungsabschnitt ausgebildet sein.

Es wird des Weiteren als vorteilhaft erachtet, wenn gemäß einer erfindungsgemäßen Ausgestaltung an der Kavität wenigstens eine quer zur Kavität verlaufende Hinterschneidung ausgebildet wird. Die faserhaltige, duroplastische Pressmasse kann während eines Pressvorgangs mittels eines Presswerkzeugs in die Kavität und in deren Hinterschneidung fließen, wodurch die Verbindung zwischen den Bauteilen weiter gestärkt wird. Die Hinterschneidung kann beispielsweise als einzelne Querbohrung ausgebildet sein. Alternativ kann wenigstens eine Kavität als Schott, also als innenliegende Wände in den Bauteilen, ausgebildet sein. Eine solche Kavität kann durch einen Hohlraum in einem Schaumkern eines Bauteils ausgebildet werden.

Nach einer weiteren vorteilhaften Ausgestaltung werden die miteinander zu verbindenden Verbindungsabschnitte derart zueinander angeordnet, dass die Verbindungsabschnitte in einem körperlichen Kontakt zueinander stehen. Hierdurch können sich die Bauteile gegeneinander abstützen.

Eine weitere vorteilhafte Ausgestaltung sieht vor, dass die miteinander zu verbindenden Verbindungsabschnitte derart zueinander angeordnet werden, dass die Verbindungsabschnitte in einem vorgegebenen Abstand zueinander angeordnet sind. Der dadurch zwischen den Verbindungsabschnitten gebildete Spalt ist vorzugsweise zumindest teilweise mit der faserhaltigen, duroplastischen Pressmasse gefüllt.

Weiter erfindungsgemäß wird eine Baugruppe mit wenigstens zwei jeweils wenigstens einen Verbindungsabschnitt aufweisenden Bauteilen, insbesondere Fahrzeugbauteilen, wobei die Verbindungsabschnitte ausschließlich über ein Verbindungsbauteil aus einer ausgehärteten faserhaltigen, duroplastischen Pressmasse miteinander verbunden sind, dadurch gekennzeichnet, dass das Verbindungsbauteil die Verbindungsabschnitte formschlüssig umgibt und dass an wenigstens einem Verbindungsabschnitt zumindest eine Kavität ausgebildet ist, die zumindest teilweise mit der ausgehärteten faserhaltigen, duroplastischen Pressmasse gefüllt ist.

Gemäß einer erfindungsgemäßen Ausgestaltung ist an der Kavität wenigstens eine quer zur Kavität verlaufende Hinterschneidung ausgebildet. Mit dieser Ausgestaltung sind die oben mit Bezug auf die entsprechende Ausgestaltung des Verfahrens genannten Vorteile und Weiterbildungen entsprechend verbunden.

Gemäß einer weiteren erfindungsgemäßen Ausgestaltung ist ein Verbindungsabschnitt von dem damit zu verbindenden Verbindungsabschnitt zumindest teilweise umgeben. Mit dieser Ausgestaltung ist der oben mit Bezug auf die entsprechende Ausgestaltung des Verfahrens genannte Vorteil entsprechend verbunden.

Diese Baugruppen können unter Verwendung der oben genannten Verfahren hergestellt werden. Mit diesen Baugruppen sind die oben mit Bezug auf die Verfahren genannten Vorteile entsprechend verbunden.

Vorteilhafterweise ist die Kavität als Durchgangsloch oder Sackloch ausgebildet. Mit dieser Ausgestaltung sind die oben mit Bezug auf die entsprechende Ausgestaltung des Verfahrens genannten Vorteile und Weiterbildungen entsprechend verbunden.

Nach einer weiteren vorteilhaften Ausgestaltung stehen die Verbindungsabschnitte in einem körperlichen Kontakt zueinander. Mit dieser Ausgestaltung ist der oben mit Bezug auf die entsprechende Ausgestaltung des Verfahrens genannte Vorteil entsprechend verbunden.

Eine weitere vorteilhafte Ausgestaltung sieht vor, dass die Verbindungsabschnitte in einem vorgegebenen Abstand zueinander angeordnet sind. Mit dieser Ausgestaltung ist der oben mit Bezug auf die entsprechende Ausgestaltung des Verfahrens genannte Vorteil entsprechend verbunden.

Weitere Einzelheiten, Merkmale und Vorteile der Erfindung ergeben sich aus der nachfolgenden Beschreibung und den Figuren. Es zeigen:
- Figur 1: eine schematische Darstellung eines nicht erfindungsgemäßen Ausführungsbeispiels für eine nicht erfindungsgemäße Baugruppe,
- Figur 2: eine schematische Darstellung eines weiteren Ausführungsbeispiels für eine nicht erfindungsgemäße Baugruppe,
- Figur 3: eine schematische Darstellung eines weiteren Ausführungsbeispiels für eine nicht erfindungsgemäße Baugruppe,
- Figur 4: eine schematische Darstellung eines weiteren Ausführungsbeispiels für eine nicht erfindungsgemäße Baugruppe,
- Figur 5: eine schematische Darstellung eines Ausführungsbeispiels für eine erfindungsgemäße Baugruppe,
- Figur 6: eine schematische Darstellung eines weiteren Ausführungsbeispiels für eine erfindungsgemäße Baugruppe,
- Figur 7: eine schematische Darstellung eines weiteren Ausführungsbeispiels für eine erfindungsgemäße Baugruppe,
- Figur 7a: eine schematische Darstellung eines weiteren Ausführungsbeispiels für eine erfindungsgemäße Baugruppe,
- Figur 8: eine schematische Darstellung eines weiteren Ausführungsbeispiels für eine nicht erfindungsgemäße Baugruppe,
- Figur 9: eine schematische Darstellung eines weiteren Ausführungsbeispiels für eine nicht erfindungsgemäße Baugruppe,
- Figur 10: eine schematische Darstellung eines weiteren Ausführungsbeispiels für eine nicht erfindungsgemäße Baugruppe,
- Figur 11: eine schematische Darstellung eines weiteren Ausführungsbeispiels für eine nicht erfindungsgemäße Baugruppe,
- Figur 12: eine schematische Darstellung eines weiteren Ausführungsbeispiels für eine nicht erfindungsgemäße Baugruppe,
- Figur 13: eine schematische Darstellung eines weiteren Ausführungsbeispiels für eine nicht erfindungsgemäße Baugruppe,
- Figur 14: eine schematische Darstellung eines weiteren Ausführungsbeispiels für eine nicht erfindungsgemäße Baugruppe,
- Figur 15: eine schematische Darstellung eines weiteren Ausführungsbeispiels für eine nicht erfindungsgemäße Baugruppe,
- Figur 16: eine schematische Darstellung eines weiteren Ausführungsbeispiels für eine nicht erfindungsgemäße Baugruppe,
- Figur 17: eine schematische Darstellung eines weiteren Ausführungsbeispiels für eine nicht erfindungsgemäße Baugruppe,
- Figur 18: eine schematische Darstellung eines weiteren Ausführungsbeispiels für eine nicht erfindungsgemäße Baugruppe,
- Figur 19: eine schematische Darstellung eines weiteren Ausführungsbeispiels für eine erfindungsgemäße Baugruppe,
- Figur 20: eine schematische Darstellung eines weiteren Ausführungsbeispiels für eine nicht erfindungsgemäße Baugruppe,
- Figur 21: eine schematische Darstellung eines weiteren Ausführungsbeispiels für eine nicht erfindungsgemäße Baugruppe,
- Figur 22: eine schematische Darstellung eines weiteren Ausführungsbeispiels für eine nicht erfindungsgemäße Baugruppe,
- Figur 23: eine schematische Darstellung eines weiteren Ausführungsbeispiels für eine nicht erfindungsgemäße Baugruppe,
- Figur 24: eine schematische Darstellung eines weiteren Ausführungsbeispiels für eine nicht erfindungsgemäße Baugruppe,
- Figur 25: eine schematische Darstellung eines weiteren Ausführungsbeispiels für eine nicht erfindungsgemäße Baugruppe,
- Figur 26: eine schematische Darstellung eines weiteren Ausführungsbeispiels für eine nicht erfindungsgemäße Baugruppe,
- Figur 27: eine schematische Darstellung eines weiteren Ausführungsbeispiels für eine nicht erfindungsgemäße Baugruppe, und
- Figur 28: eine schematische Darstellung eines weiteren Ausführungsbeispiels für eine nicht erfindungsgemäße Baugruppe.

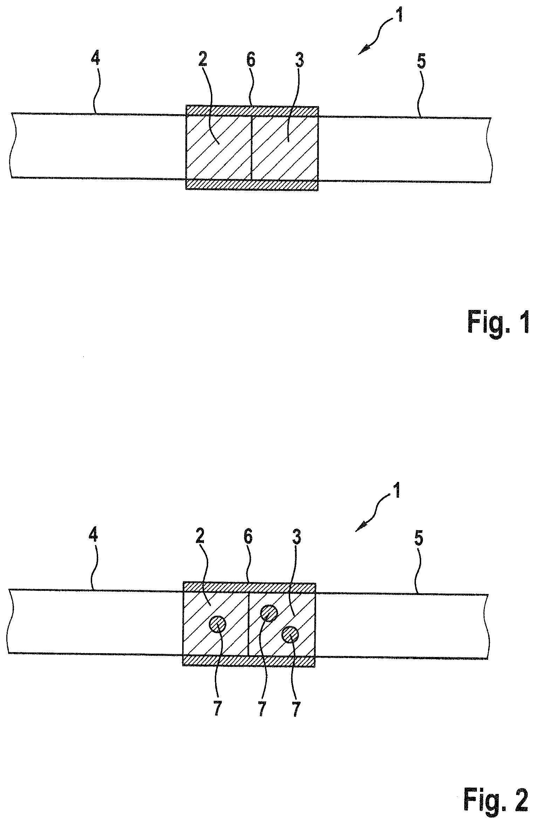

Figur 1 zeigt eine schematische Darstellung eines Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt.

Die Verbindungsabschnitte 2 und 3 stehen in einem körperlichen Kontakt zueinander.

Figur 2 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander. An dem Verbindungsabschnitt 2 ist eine Kavität 7 ausgebildet, die zumindest teilweise mit der ausgehärteten faserhaltigen, duroplastischen Pressmasse gefüllt ist. An dem Verbindungsabschnitt 3 sind zwei Kavitäten 7 ausgebildet, die zumindest teilweise mit der ausgehärteten faserhaltigen, duroplastischen Pressmasse gefüllt sind.

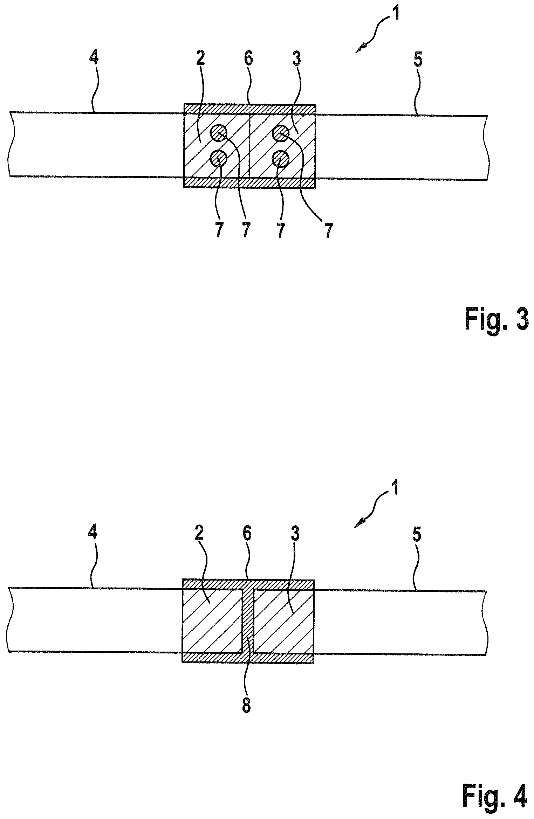

Figur 3 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander. An jedem Verbindungsabschnitt 2 bzw. 3 sind zwei Kavitäten 7 ausgebildet, die zumindest teilweise mit der ausgehärteten faserhaltigen, duroplastischen Pressmasse gefüllt sind.

Figur 4 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 sind in unter Belassung eines Spalts 8 beabstandet zueinander angeordnet.

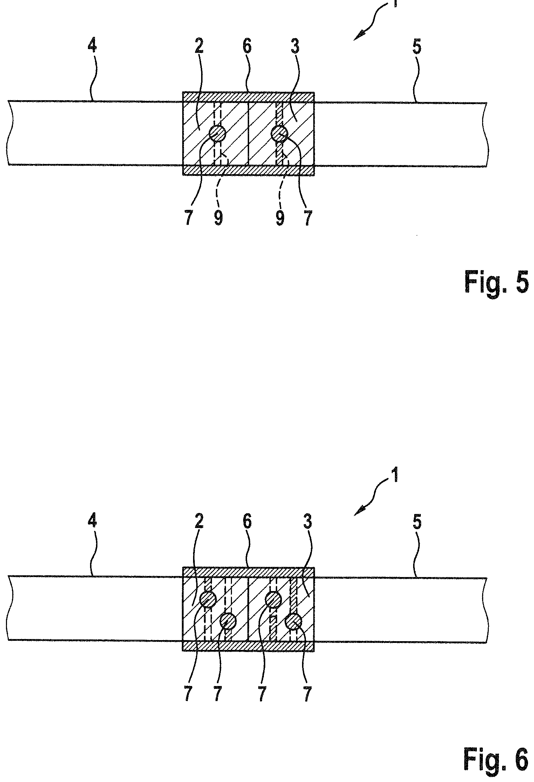

Figur 5 zeigt eine schematische Darstellung eines Ausführungsbeispiels für eine erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander. An jedem Verbindungsabschnitt 2 ist eine Kavität 7 ausgebildet, die zumindest teilweise mit der ausgehärteten faserhaltigen, duroplastischen Pressmasse gefüllt ist. An jeder Kavität 7 ist eine Hinterschneidung 9 in Form von Querbohrungen ausgebildet. Die Hinterschneidung 9 an dem Verbindungsabschnitt 3 ist mit der ausgehärteten faserhaltigen, duroplastischen Pressmasse gefüllt, die in die Hinterschneidung 9 eingepresst worden ist.

Figur 6 zeigt eine schematische Darstellung eines weiteren Ausführungsbeispiels für eine erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander. An jedem Verbindungsabschnitt 2 sind zwei Kavitäten 7 ausgebildet, die zumindest teilweise mit der ausgehärteten faserhaltigen, duroplastischen Pressmasse gefüllt sind. An jeder Kavität 7 ist eine Hinterschneidung 9 in Form von Querbohrungen ausgebildet. Die Hinterschneidungen 9 sind teilweise mit der ausgehärteten faserhaltigen, duroplastischen Pressmasse gefüllt, die in die Hinterschneidungen 9 eingepresst worden ist.

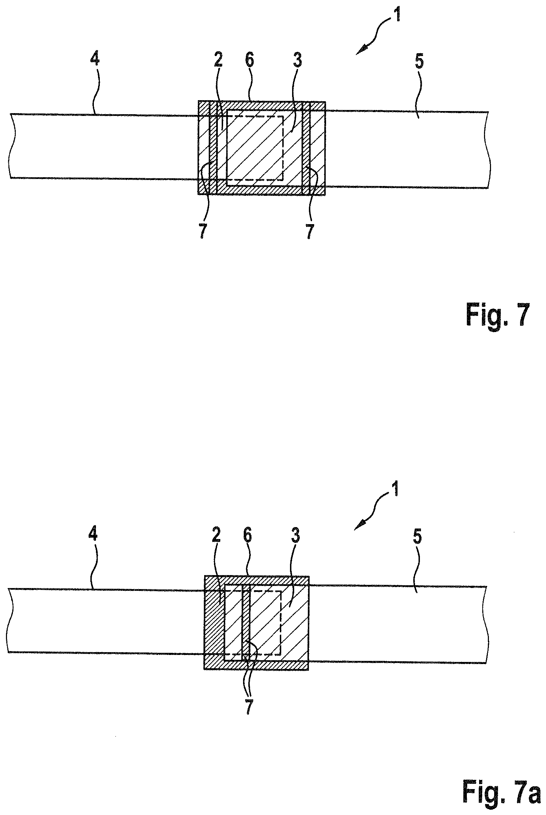

Figur 7 zeigt eine schematische Darstellung eines weiteren Ausführungsbeispiels für eine erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet und über eine gewisse Länge ineinander gesteckt sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Der Verbindungsabschnitt 2 ist teilweise von dem damit zu verbindenden Verbindungsabschnitt 3 umgeben. An jedem Verbindungsabschnitt 2 ist eine Kavität 7 in Form einer Querbohrung ausgebildet, die mit der ausgehärteten faserhaltigen, duroplastischen Pressmasse gefüllt ist. Die Kavitäten 7 können auch als Hinterschneidungen 9 entsprechend Figuren 5 oder 6 oder als Schotte ausgebildet sein.

Figur 7a zeigt eine schematische Darstellung eines weiteren Ausführungsbeispiels für eine erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet und über eine gewisse Länge ineinander gesteckt sind. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Der Verbindungsabschnitt 2 ist teilweise von dem damit zu verbindenden Verbindungsabschnitt 3 umgeben. An jedem Verbindungsabschnitt 2 ist eine Kavität 7 in Form einer Querbohrung ausgebildet, die mit der ausgehärteten faserhaltigen, duroplastischen Pressmasse gefüllt ist, wobei die Kavitäten 7 zueinander fluchten angeordnet sind und im Überlappungsbereich der Verbindungsabschnitte 2 und 3 angeordnet sind. Hierdurch können die Verbindungsstelle und das Verbindungsbauteil 6 kleiner dimensioniert werden. Die Kavitäten 7 können auch als Hinterschneidungen 9 entsprechend Figuren 5 oder 6 oder als Schotte ausgebildet sein.

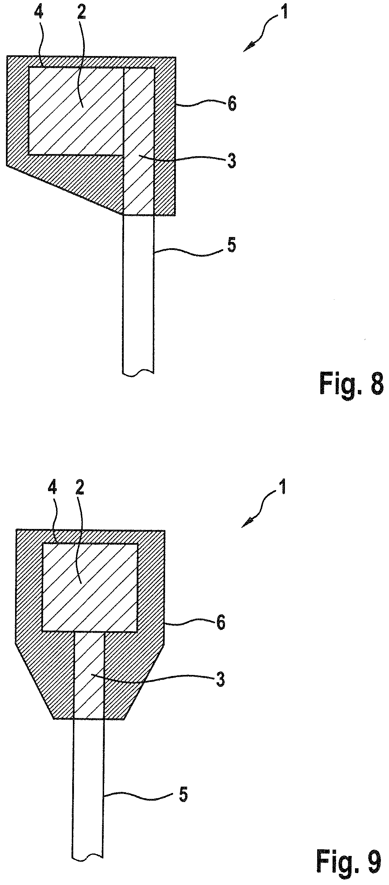

Figur 8 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, wobei das Bauteil 4 als quer zur Zeichnungsebene verlaufendes Profil und das Bauteil 5 als Schale ausgebildet ist. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander.

Figur 9 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, wobei das Bauteil 4 als quer zur Zeichnungsebene verlaufendes Profil und das Bauteil 5 als Schale ausgebildet ist. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander.

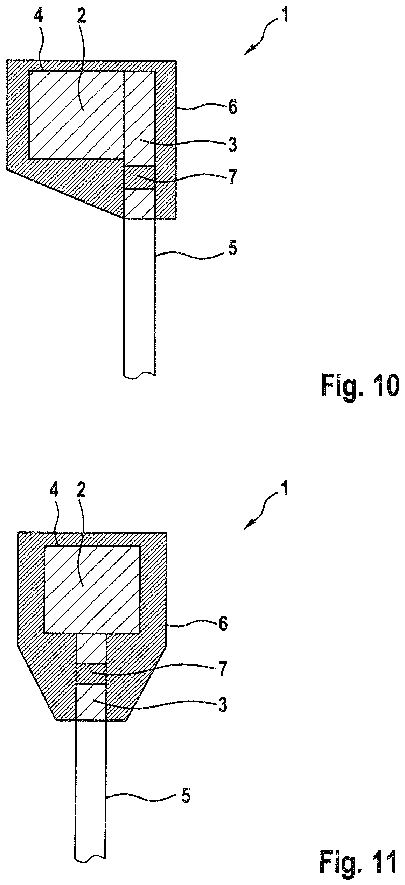

Figur 10 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, wobei das Bauteil 4 als quer zur Zeichnungsebene verlaufendes Profil und das Bauteil 5 als Schale ausgebildet ist. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander. Im Gegensatz zu dem in Figur 8 gezeigten Ausführungsbeispiel ist an dem Bauteil 5 eine Kavität 7 in Form einer Durchgangsbohrung ausgebildet, die mit der ausgehärteten faserhaltigen, duroplastischen Pressmasse gefüllt ist.

Figur 11 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, wobei das Bauteil 4 als quer zur Zeichnungsebene verlaufendes Profil und das Bauteil 5 als Schale ausgebildet ist. Die Verbindungsabschnitte 2 und 3 sind ausschließlich über ein Verbindungsbauteil 6 aus einer ausgehärteten faserhaltigen, duroplastischen Pressmasse miteinander verbunden, welches die Verbindungsabschnitte 2 und 3 zumindest teilweise formschlüssig umgibt. Die Verbindungsabschnitte 2 und 3 stehen in einem körperlichen Kontakt zueinander. Im Gegensatz zu dem in Figur 9 gezeigten Ausführungsbeispiel ist an dem Bauteil 5 eine Kavität 7 in Form einer Durchgangsbohrung ausgebildet, die mit der ausgehärteten faserhaltigen, duroplastischen Pressmasse gefüllt ist.

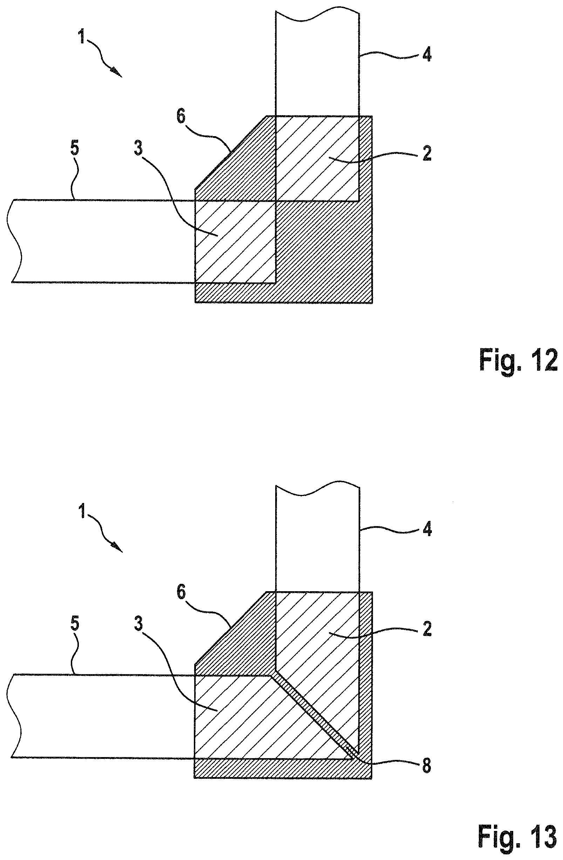

Figur 12 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet und winklig zueinander angeordnet sind. Die Verbindungsabschnitte 2 und 3 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2 und 3 zumindest teilweise formschlüssig umgibt. Die Verbindungsabschnitte 2 und 3 stehen in einem körperlichen Kontakt zueinander.

Figur 13 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet und unter Ausbildung einer Gehrung winklig zueinander angeordnet sind. Die Verbindungsabschnitte 2 und 3 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2 und 3 zumindest teilweise formschlüssig umgibt. Die Verbindungsabschnitte 2 und 3 sind unter Belassung eines mit der ausgehärteten faserhaltigen, duroplastischen Pressmasse gefüllten Spalts 8 beabstandet voneinander angeordnet.

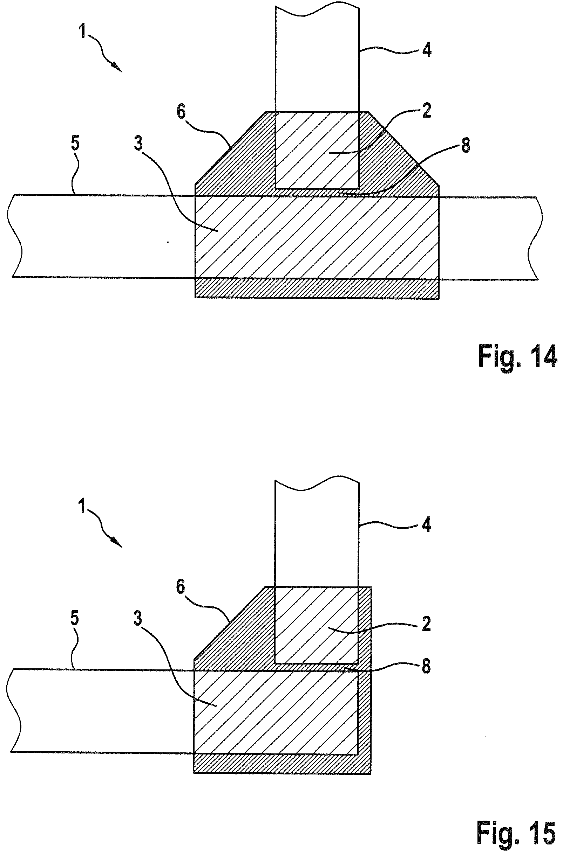

Figur 14 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet und winklig zueinander angeordnet sind. Die Verbindungsabschnitte 2 und 3 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2 und 3 zumindest teilweise formschlüssig umgibt. Die Verbindungsabschnitte 2 und 3 sind unter Belassung eines mit der ausgehärteten faserhaltigen, duroplastischen Pressmasse gefüllten Spalts 8 beabstandet voneinander angeordnet.

Figur 15 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet und winklig zueinander angeordnet sind. Die Verbindungsabschnitte 2 und 3 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2 und 3 zumindest teilweise formschlüssig umgibt. Die Verbindungsabschnitte 2 und 3 sind unter Belassung eines mit der ausgehärteten faserhaltigen, duroplastischen Pressmasse gefüllten Spalts 8 beabstandet voneinander angeordnet.

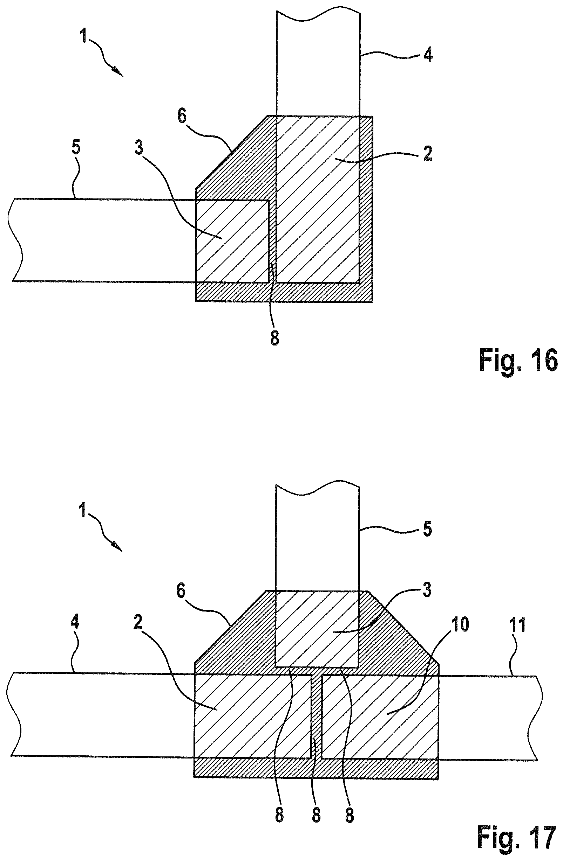

Figur 16 zeigt eine schematische Darstellung eines weiteren Ausführungsbeispiels für eine nicht erfindungsgemäße Baugruppe 1. Die Baugruppe 1 umfasst zwei jeweils einen Verbindungsabschnitt 2 bzw. 3 aufweisende Bauteile 4 und 5, die als Profile ausgebildet und winklig zueinander angeordnet sind. Die Verbindungsabschnitte 2 und 3 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2 und 3 zumindest teilweise formschlüssig umgibt. Die Verbindungsabschnitte 2 und 3 sind unter Belassung eines mit der ausgehärteten faserhaltigen, duroplastischen Pressmasse gefüllten Spalts 8 beabstandet voneinander angeordnet.

Figur 17 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, die als Profile ausgebildet sind. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2, 3 und 10 sind jeweils unter Belassung eines mit der ausgehärteten faserhaltigen, duroplastischen Pressmasse gefüllten Spalts 8 beabstandet voneinander angeordnet.

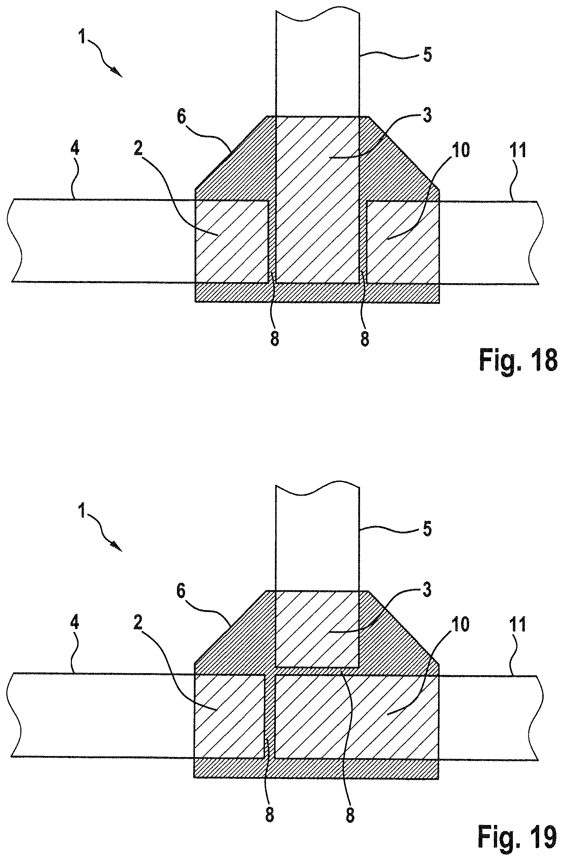

Figur 18 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, die als Profile ausgebildet sind, wobei der Verbindungsabschnitt 3 teilweise zwischen den Verbindungabschnitten 2 und 10 angeordnet ist. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2 und 3 bzw. 3 und 11 sind jeweils unter Belassung eines mit der ausgehärteten faserhaltigen, duroplastischen Pressmasse gefüllten Spalts 8 beabstandet voneinander angeordnet.

Figur 19 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, die als Profile ausgebildet sind. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2 und 10 bzw. 3 und 10 sind jeweils unter Belassung eines mit der ausgehärteten faserhaltigen, duroplastischen Pressmasse gefüllten Spalts 8 beabstandet voneinander angeordnet.

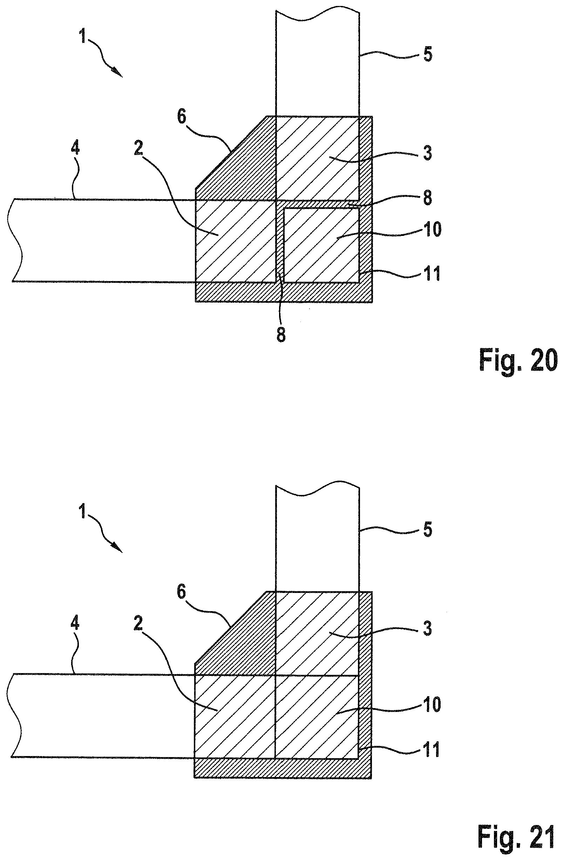

Figur 20 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, die als Profile ausgebildet sind, wobei das Bauteil 11 quer zur Zeichnungsebene verläuft. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2 und 10 bzw. 3 und 10 sind jeweils unter Belassung eines mit der ausgehärteten faserhaltigen, duroplastischen Pressmasse gefüllten Spalts 8 beabstandet voneinander angeordnet.

Figur 21 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, die als Profile ausgebildet sind, wobei das Bauteil 11 quer zur Zeichnungsebene verläuft. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2 und 10 bzw. 3 und 10 stehen in einem körperlichen Kontakt zueinander.

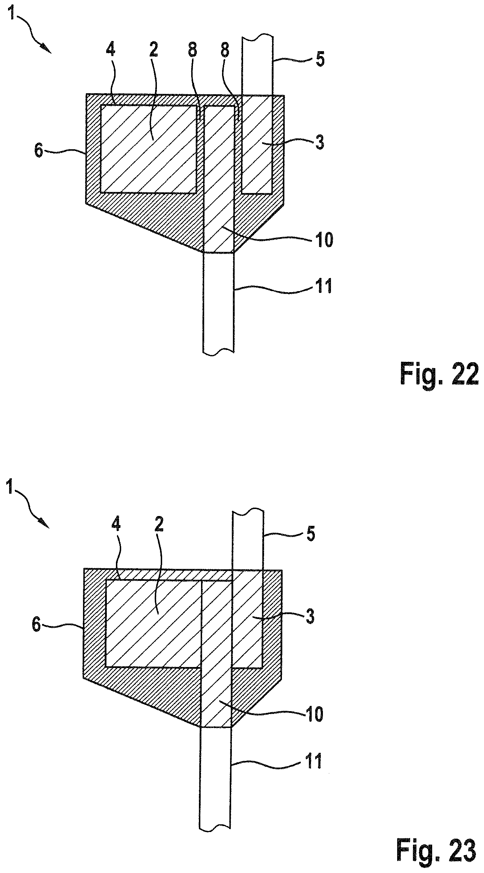

Figur 22 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, wobei die Bauteile 4 und 5 als Profile ausgebildet sind und das Bauteil 11 als Schale ausgebildet ist, und wobei das Bauteil 4 quer zur Zeichnungsebene verläuft. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2 und 10 bzw. 3 und 10 sind jeweils unter Belassung eines mit der ausgehärteten faserhaltigen, duroplastischen Pressmasse gefüllten Spalts 8 beabstandet voneinander angeordnet. Der Verbindungsabschnitt 10 ist teilweise zwischen den Verbindungsabschnitten 2 und 3 angeordnet.

Figur 23 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, wobei die Bauteile 4 und 5 als Profile ausgebildet sind und das Bauteil 11 als Schale ausgebildet ist, und wobei das Bauteil 4 quer zur Zeichnungsebene verläuft. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2 und 10 bzw. 3 und 10 stehen in einem körperlichen Kontakt zueinander. Der Verbindungsabschnitt 10 ist teilweise zwischen den Verbindungsabschnitten 2 und 3 angeordnet.

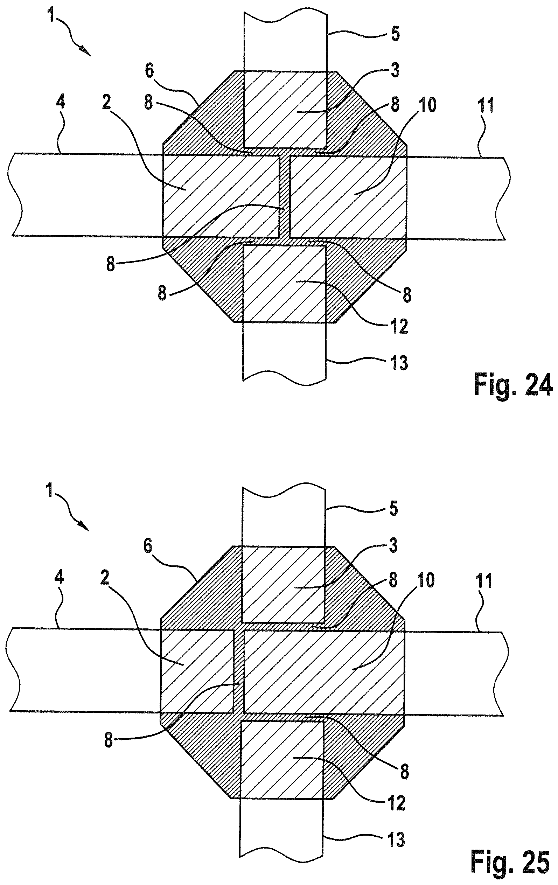

Figur 24 zeigt eine schematische Darstellung eines weiteren Ausführungsbeispiels für eine nicht erfindungsgemäße Baugruppe 1. Die Baugruppe 1 umfasst vier jeweils einen Verbindungsabschnitt 2, 3, 10 bzw. 12 aufweisende Bauteile 4, 5, 11 und 13, die als Profile ausgebildet sind. Die Verbindungsabschnitte 2, 3, 10 und 12 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3, 10 und 12 zumindest teilweise formschlüssig umgibt. Die Verbindungsabschnitte 2, 3, 10 und 12 sind unter Belassung von mit der ausgehärteten faserhaltigen, duroplastischen Pressmasse gefüllten Spalten 8 beabstandet voneinander angeordnet. Die Verbindungsabschnitte 2 und 10 sind teilweise zwischen den Verbindungsabschnitten 3 und 12 angeordnet.

Figur 25 zeigt eine schematische Darstellung eines weiteren Ausführungsbeispiels für eine nicht erfindungsgemäße Baugruppe 1. Die Baugruppe 1 umfasst vier jeweils einen Verbindungsabschnitt 2, 3, 10 bzw. 12 aufweisende Bauteile 4, 5, 11 und 13, die als Profile ausgebildet sind. Die Verbindungsabschnitte 2, 3, 10 und 12 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3, 10 und 12 zumindest teilweise formschlüssig umgibt. Die Verbindungsabschnitte 2, 3, 10 und 12 sind unter Belassung von mit der ausgehärteten faserhaltigen, duroplastischen Pressmasse gefüllten Spalten 8 beabstandet voneinander angeordnet. Der Verbindungsabschnitt 10 ist teilweise zwischen den Verbindungsabschnitten 3 und 12 angeordnet.

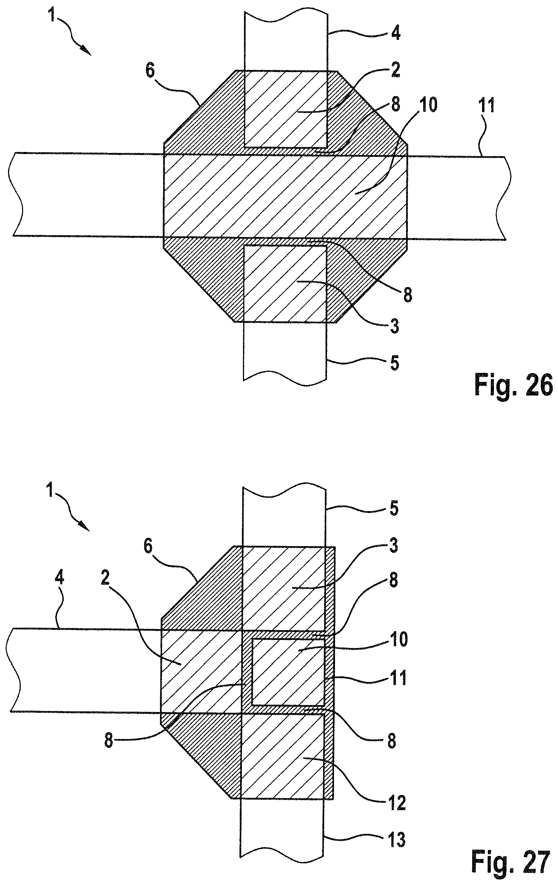

Figur 26 zeigt eine schematische Darstellung eines weiteren Ausführungsbeispiels für eine nicht erfindungsgemäße Baugruppe 1. Die Baugruppe 1 umfasst drei jeweils einen Verbindungsabschnitt 2, 3 bzw. 10 aufweisende Bauteile 4, 5 und 11, wobei die Bauteile 4, 5 und 11 als Profile ausgebildet sind und der Verbindungsabschnitt 10 zwischen den beiden Verbindungsabschnitten 2 und 3 angeordnet ist. Die Verbindungsabschnitte 2, 3 und 10 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3 und 10 zumindest teilweise formschlüssig umgibt. Die Verbindungsabschnitte 2 und 10 bzw. 3 und 10 sind jeweils unter Belassung eines mit der ausgehärteten faserhaltigen, duroplastischen Pressmasse gefüllten Spalts 8 beabstandet voneinander angeordnet.

Figur 27 zeigt eine schematische Darstellung eines weiteren Ausführungsbeispiels für eine nicht erfindungsgemäße Baugruppe 1. Die Baugruppe 1 umfasst vier jeweils einen Verbindungsabschnitt 2, 3, 10 bzw. 12 aufweisende Bauteile 4, 5, 11 und 13, die als Profile ausgebildet sind, wobei das Bauteil 11 sich quer zur Zeichnungsebene erstreckt. Die Verbindungsabschnitte 2, 3, 10 und 12 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3, 10 und 12 zumindest teilweise formschlüssig umgibt. Die Verbindungsabschnitte 2, 3, 10 und 12 sind unter Belassung von mit der ausgehärteten faserhaltigen, duroplastischen Pressmasse gefüllten Spalten 8 beabstandet voneinander angeordnet. Der Verbindungsabschnitt 10 ist teilweise zwischen den Verbindungsabschnitten 3 und 12 angeordnet.

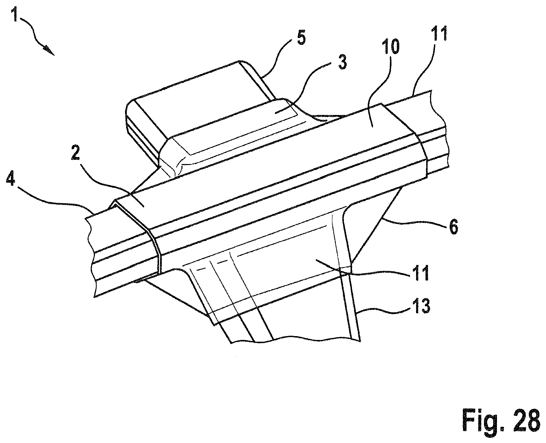

Figur 28 zeigt eine schematische und perspektivische Darstellung eines weiteren Ausführungsbeispiels für eine nicht erfindungsgemäße Baugruppe 1 für ein Fahrzeug. Die Baugruppe 1 umfasst vier jeweils einen Verbindungsabschnitt 2, 3, 10 bzw. 12 aufweisende Bauteile 4, 5, 11 und 13, die als Profile ausgebildet sind, wobei das Bauteil 11 sich quer zur Zeichnungsebene erstreckt. Die Verbindungsabschnitte 2, 3, 10 und 12 sind ausschließlich über ein Verbindungsbauteil 6 aus einer ausgehärteten faserhaltigen, duroplastischen Pressmasse in Form eines Knotenbauteils miteinander verbunden, welches die Verbindungsabschnitte 2, 3, 10 und 12 zumindest teilweise formschlüssig umgibt.

Zu den oben beschriebenen Ausführungsbeispielen ist anzumerken, dass alle Verbindungsvarianten auch ohne Kavitäten (7) ausgebildet sein können. Des Weiteren können alle Ausführungsbeispiele für eine reine Schale-Schale-Verbindungen, Schale-Profil-Verbindungen in beliebigen Kombinationen oder als reine Profil-Profil-Verbindungen ausgebildet sein.

### Bezugszeichenliste:

- 1: Baugruppe
- 2: Verbindungsabschnitt
- 3: Verbindungsabschnitt
- 4: Bauteil
- 5: Bauteil
- 6: Verbindungsbauteil
- 7: Kavität
- 8: Spalt
- 9: Hinterschneidung
- 10: Verbindungsabschnitt
- 11: Bauteil
- 12: Verbindungsabschnitt
- 13: Bauteil

## Patentansprüche

1. Verfahren zum Verbinden von Verbindungsabschnitten (2, 3, 10, 12) von wenigstens zwei Bauteilen (4, 5, 11, 13), insbesondere Fahrzeugbauteilen, wobei die Verbindungsabschnitte (2, 3, 10, 12) ausschließlich unter Verwendung einer faserhaltigen, duroplastischen Pressmasse miteinander verbunden werden, **gekennzeichnet durch** die Schritte:
- Einbringen der miteinander zu verbindenden Verbindungsabschnitte (2, 3, 10, 12) in ein Presswerkzeug;
- Einbringen einer faserhaltigen, duroplastischen Pressmassen in das Presswerkzeug im Bereich der herzustellenden Verbindung zwischen den Verbindungsabschnitten (2, 3, 10, 12) vor und/oder nach dem Einbringen der miteinander zu verbindenden Verbindungsabschnitte (2, 3, 10, 12) in das Presswerkzeug;
- Schließen des Presswerkzeugs nach dem Einbringen der miteinander zu verbindenden Verbindungsabschnitte und der faserhaltigen, duroplastischen Pressmasse in das Presswerkzeug; und
- Aushärten der faserhaltigen, duroplastischen Pressmasse, wobei
an wenigstens einem Verbindungsabschnitt (2, 3, 10, 12) vor dem Verbinden der Verbindungsabschnitte (2, 3, 10, 12) zumindest eine Kavität (7) ausgebildet wird, **dadurch gekennzeichnet, dass**
an der Kavität (7) wenigstens eine quer zu der Kavität verlaufende Hinterschneidung (9) ausgebildet wird.

2. Verfahren zum Verbinden von Verbindungsabschnitten (2, 3, 10, 12) von wenigstens zwei Bauteilen (4, 5, 11, 13), insbesondere Fahrzeugbauteilen, wobei die Verbindungsabschnitte (2, 3, 10, 12) ausschließlich unter Verwendung einer faserhaltigen, duroplastischen Pressmasse miteinander verbunden werden, **gekennzeichnet durch** die Schritte:
- Einbringen der miteinander zu verbindenden Verbindungsabschnitte (2, 3, 10, 12) in ein Presswerkzeug;
- Einbringen einer faserhaltigen, duroplastischen Pressmassen in das Presswerkzeug im Bereich der herzustellenden Verbindung zwischen den Verbindungsabschnitten (2, 3, 10, 12) vor und/oder nach dem Einbringen der miteinander zu verbindenden Verbindungsabschnitte (2, 3, 10, 12) in das Presswerkzeug;
- Schließen des Presswerkzeugs nach dem Einbringen der miteinander zu verbindenden Verbindungsabschnitte und der faserhaltigen, duroplastischen Pressmasse in das Presswerkzeug; und
- Aushärten der faserhaltigen, duroplastischen Pressmasse, **dadurch gekennzeichnet, dass**
dass die miteinander zu verbindenden Verbindungsabschnitte (2, 3, 10, 12) derart zueinander angeordnet werden, dass ein Verbindungsabschnitt (2, 3, 10, 12) von dem damit zu verbindenden Verbindungsabschnitt (2, 3, 10, 12) zumindest teilweise umgeben ist.

3. Verfahren nach Anspruch 2, **dadurch gekennzeichnet, dass** an wenigstens einem Verbindungsabschnitt (2, 3, 10, 12) vor dem Verbinden der Verbindungsabschnitte (2, 3, 10, 12) zumindest eine Kavität (7) ausgebildet wird.

4. Verfahren nach Anspruch 1 oder 3, **dadurch gekennzeichnet, dass** die Kavität (7) als Durchgangsloch oder Sackloch ausgebildet wird.

5. Verfahren nach Anspruch 3 oder 4, **dadurch gekennzeichnet, dass** an der Kavität (7) wenigstens eine quer zu der Kavität verlaufende Hinterschneidung (9) ausgebildet wird.

6. Verfahren nach einem der Ansprüche 1 bis 5, **dadurch gekennzeichnet, dass** die miteinander zu verbindenden Verbindungsabschnitte (2, 3, 10, 12) derart zueinander angeordnet werden, dass die Verbindungsabschnitte (2, 3, 10, 12) in einem körperlichen Kontakt zueinander stehen.

7. Verfahren nach einem der Ansprüche 1 bis 5, **dadurch gekennzeichnet, dass** die miteinander zu verbindenden Verbindungsabschnitte (2, 3, 10, 12) derart zueinander angeordnet werden, dass die Verbindungsabschnitte (2, 3, 10, 12) in einem vorgegebenen Abstand zueinander angeordnet sind.

8. Baugruppe (1) mit wenigstens zwei jeweils wenigstens einen Verbindungsabschnitt (2, 3, 10, 12) aufweisenden Bauteilen (4, 5, 11, 13), insbesondere Fahrzeugbauteilen, wobei die Verbindungsabschnitte (2, 3, 10, 12) ausschließlich über ein Verbindungsbauteil (6) aus einer ausgehärteten faserhaltigen, duroplastischen Pressmasse miteinander verbunden sind, **dadurch gekennzeichnet, dass** das Verbindungsbauteil (6) die Verbindungsabschnitte (2, 3, 10, 12) formschlüssig umgibt und dass an wenigstens einem Verbindungsabschnitt (2, 3, 10, 12) zumindest eine Kavität (7) ausgebildet ist, die zumindest teilweise mit der ausgehärteten faserhaltigen, duroplastischen Pressmasse gefüllt ist, **dadurch gekennzeichnet, dass**
an der Kavität (7) wenigstens eine quer zu der Kavität (7) verlaufende Hinterschneidung (9) ausgebildet ist.

9. Baugruppe (1) mit wenigstens zwei jeweils wenigstens einen Verbindungsabschnitt (2, 3, 10, 12) aufweisenden Bauteilen (4, 5, 11, 13), insbesondere Fahrzeugbauteilen, wobei die Verbindungsabschnitte (2, 3, 10, 12) ausschließlich über ein Verbindungsbauteil (6) aus einer ausgehärteten faserhaltigen, duroplastischen Pressmasse miteinander verbunden sind, **dadurch gekennzeichnet, dass** das Verbindungsbauteil (6) die Verbindungsabschnitte (2, 3, 10, 12) formschlüssig umgibt und dass an wenigstens einem Verbindungsabschnitt (2, 3, 10, 12) zumindest eine Kavität (7) ausgebildet ist, die zumindest teilweise mit der ausgehärteten faserhaltigen, duroplastischen Pressmasse gefüllt ist **dadurch gekennzeichnet, dass**
ein Verbindungsabschnitt (2, 3, 10, 12) von dem damit zu verbindenden Verbindungsabschnitt (2, 3, 10, 12) zumindest teilweise umgeben ist.

10. Baugruppe (1) nach Anspruch 8 oder 9, **dadurch gekennzeichnet, dass** die Kavität (7) als Durchgangsloch oder Sackloch ausgebildet ist.

11. Baugruppe (1) nach Anspruch 9 oder 10, **dadurch gekennzeichnet, dass** an der Kavität (7) wenigstens eine quer zu der Kavität (7) verlaufende Hinterschneidung (9) ausgebildet ist.

12. Baugruppe (1) nach einem der Ansprüche 8 bis 11, **dadurch gekennzeichnet, dass** die Verbindungsabschnitte (2, 3, 10, 12) in einem körperlichen Kontakt zueinander stehen.

13. Baugruppe (1) nach einem der Ansprüche 8 bis 11, **dadurch gekennzeichnet, dass** die Verbindungsabschnitte (2, 3, 10, 12) in einem vorgegebenen Abstand zueinander angeordnet sind.

## Claims

1. Method for joining connecting portions (2, 3, 10, 12) of at least two components (4, 5, 11, 13), in particular vehicle components, wherein the connecting portions (2, 3, 10, 12) are joined to one another exclusively using a fibrous thermoset moulding compound, **characterized by** the steps of:
- introducing into a compression mould the connecting portions (2, 3, 10, 12) to be joined to one another;
- introducing into the compression mould, in the region of the join between the connecting portions (2, 3, 10, 12) that is to be established, a fibrous thermoset moulding compound before and/or after the connecting portions (2, 3, 10, 12) to be joined to one another have been introduced into the compression mould;
- closing the compression mould after the connecting portions to be joined to one another and the fibrous thermoset moulding compound have been introduced into the compression mould; and
- curing the fibrous thermoset moulding compound, wherein
at least one cavity (7) is formed at at least one connecting portion (2, 3, 10, 12) before the connecting portions (2, 3, 10, 12) are joined, **characterized in that**,
at the cavity (7), there is formed at least one undercut (9) which extends transversely to the cavity.

2. Method for joining connecting portions (2, 3, 10, 12) of at least two components (4, 5, 11, 13), in particular vehicle components, wherein the connecting portions (2, 3, 10, 12) are joined to one another exclusively using a fibrous thermoset moulding compound, **characterized by** the steps of:
- introducing into a compression mould the connecting portions (2, 3, 10, 12) to be joined to one another;
- introducing into the compression mould, in the region of the join between the connecting portions (2, 3, 10, 12) that is to be established, a fibrous thermoset moulding compound before and/or after the connecting portions (2, 3, 10, 12) to be joined to one another have been introduced into the compression mould;
- closing the compression mould after the connecting portions to be joined to one another and the fibrous thermoset moulding compound have been introduced into the compression mould; and
- curing the fibrous thermoset moulding compound, **characterized in that**
the connecting portions (2, 3, 10, 12) to be joined to one another are arranged in relation to one another in such a way that one connecting portion (2, 3, 10, 12) is surrounded at least partially by the connecting portion (2, 3, 10, 12) to be joined thereto.

3. Method according to Claim 2, **characterized in that** at least one cavity (7) is formed at at least one connecting portion (2, 3, 10, 12) before the connecting portions (2, 3, 10, 12) are joined.

4. Method according to Claim 1 or 3, **characterized in that** the cavity (7) is formed as a through-hole or blind hole.

5. Method according to Claim 3 or 4, **characterized in that**, at the cavity (7), there is formed at least one undercut (9) which extends transversely to the cavity.

6. Method according to one of Claims 1 to 5, **characterized in that** the connecting portions (2, **3,** 10, 12) to be joined to one another are arranged in relation to one another in such a way that the connecting portions (2, **3,** 10, 12) are in physical contact with one another.

7. Method according to one of Claims 1 to 5, **characterized in that** the connecting portions (2, **3,** 10, 12) to be joined to one another are arranged in relation to one another in such a way that the connecting portions (2, **3,** 10, 12) are arranged at a predefined distance from one another.

8. Assembly (1) having at least two components (4, 5, 11, 13), in particular vehicle components, which each have at least one connecting portion (2, 3, 10, 12), wherein the connecting portions (2, **3,** 10, 12) are joined to one another exclusively via a connecting component (6) composed of a cured fibrous thermoset moulding compound, **characterized in that** the connecting component (6) surrounds the connecting portions (2, 3, 10, 12) in a form-fitting manner, and **in that** at least one cavity (7) is formed at at least one connecting portion (2, 3, 10, 12) and is filled at least partially with the cured fibrous thermoset moulding compound, **characterized in that**,
at the cavity (7), there is formed at least one undercut (9) which extends transversely to the cavity (7).

9. Assembly (1) having at least two components (4, 5, 11, 13), in particular vehicle components, which each have at least one connecting portion (2, 3, 10, 12), wherein the connecting portions (2, 3, 10, 12) are joined to one another exclusively via a connecting component (6) composed of a cured fibrous thermoset moulding compound, **characterized in that** the connecting component (6) surrounds the connecting portions (2, 3, 10, 12) in a form-fitting manner, and **in that** at least one cavity (7) is formed at at least one connecting portion (2, 3, 10, 12) and is filled at least partially with the cured fibrous thermoset moulding compound, **characterized in that**
one connecting portion (2, 3, 10, 12) is surrounded at least partially by the connecting portion (2, 3, 10, 12) to be joined thereto.

10. Assembly (1) according to Claim 8 or 9, **characterized in that** the cavity (7) is formed as a through-hole or blind hole.

11. Assembly (1) according to Claim 9 or 10, **characterized in that**, at the cavity (7), there is formed at least one undercut (9) which extends transversely to the cavity (7).

12. Assembly (1) according to one of Claims 8 to 11, **characterized in that** the connecting portions (2, 3, 10, 12) are in physical contact with one another.

13. Assembly (1) according to one of Claims 8 to 11, **characterized in that** the connecting portions (2, 3, 10, 12) are arranged at a predefined distance from one another.

## Revendications

1. Procédé pour relier des sections de liaison (2, 3, 10, 12) d'au moins deux composants (4, 5, 11, 13), notamment composants de véhicule, les sections de liaison (2, 3, 10, 12) étant reliées entre elles exclusivement en utilisant une masse de compression thermodurcissable contenant des fibres, **caractérisé par** les étapes suivantes :
- l'introduction des sections de liaison (2, 3, 10, 12) à relier entre elles dans un outil de compression ;
- l'introduction d'une masse de compression thermodurcissable contenant des fibres dans l'outil de compression dans la zone de la liaison à établir entre les sections de liaison (2, 3, 10, 12) avant et/ou après l'introduction des sections de liaison (2, 3, 10, 12) à relier entre elles dans l'outil de compression ;
- la fermeture de l'outil de compression après l'introduction dans l'outil de compression des sections de liaison à relier entre elles et de la masse de compression thermodurcissable contenant des fibres ; et
- le durcissement de la masse de compression thermodurcissable contenant des fibres,
au moins une cavité (7) étant réalisée sur au moins une section de liaison (2, 3, 10, 12) avant la liaison des sections de liaison (2, 3, 10, 12), **caractérisé en ce que** au moins une contre-dépouille (9) s'étendant transversalement à la cavité (7) est réalisée sur la cavité.

2. Procédé pour relier des sections de liaison (2, 3, 10, 12) d'au moins deux composants (4, 5, 11, 13), notamment composants de véhicule, les sections de liaison (2, 3, 10, 12) étant reliées entre elles exclusivement en utilisant une masse de compression thermodurcissable contenant des fibres, **caractérisé par** les étapes suivantes :
- l'introduction des sections de liaison (2, 3, 10, 12) à relier entre elles dans un outil de compression ;
- l'introduction d'une masse de compression thermodurcissable contenant des fibres dans l'outil de compression dans la zone de la liaison à établir entre les sections de liaison (2, 3, 10, 12) avant et/ou après l'introduction des sections de liaison (2, 3, 10, 12) à relier entre elles dans l'outil de compression ;
- la fermeture de l'outil de compression après l'introduction dans l'outil de compression des sections de liaison à relier entre elles et de la masse de compression thermodurcissable contenant des fibres ; et
- le durcissement de la masse de compression thermodurcissable contenant des fibres, **caractérisé en ce que**
les sections de liaison (2, 3, 10, 12) à relier entre elles sont agencées les unes par rapport aux autres de telle sorte qu'une section de liaison (2, 3, 10, 12) est au moins partiellement entourée par la section de liaison (2, 3, 10, 12) à relier avec elle.

3. Procédé selon la revendication 2, **caractérisé en ce qu'**au moins une cavité (7) est réalisée sur au moins une section de liaison (2, 3, 10, 12) avant la liaison des sections de liaison (2, 3, 10, 12).

4. Procédé selon la revendication 1 ou 3, **caractérisé en ce que** la cavité (7) est réalisée sous forme de trou traversant ou de trou borgne.

5. Procédé selon la revendication 3 ou 4, **caractérisé en ce qu'**au moins une contre-dépouille (9) s'étendant transversalement à la cavité est réalisée sur la cavité (7).

6. Procédé selon l'une quelconque des revendications 1 à 5, **caractérisé en ce que** les sections de liaison (2, 3, 10, 12) à relier entre elles sont agencées les unes par rapport aux autres de telle sorte que les sections de liaison (2, 3, 10, 12) sont en contact physique les unes avec les autres.

7. Procédé selon l'une quelconque des revendications 1 à 5, **caractérisé en ce que** les sections de liaison (2, 3, 10, 12) à relier entre elles sont agencées les unes par rapport aux autres de telle sorte que les sections de liaison (2, 3, 10, 12) sont agencées à une distance prédéterminée les unes des autres.

8. Ensemble (1) avec au moins deux composants (4, 5, 11, 13), notamment composants de véhicule, présentant chacun au moins une section de liaison (2, 3, 10, 12), les sections de liaison (2, 3, 10, 12) étant reliées entre elles exclusivement par l'intermédiaire d'un composant de liaison (6) constitué d'une masse de compression thermodurcissable contenant des fibres et durcie, **caractérisé en ce que** le composant de liaison (6) entoure les sections de liaison (2, 3, 10, 12) par complémentarité de forme et **en ce qu'**au moins une cavité (7) est réalisée sur au moins une section de liaison (2, 3, 10, 12), laquelle est remplie au moins partiellement avec la masse de compression thermodurcissable contenant des fibres et durcie, **caractérisé en ce que** au moins une contre-dépouille (9) s'étendant transversalement à la cavité (7) est réalisée sur la cavité (7).

9. Ensemble (1) avec au moins deux composants (4, 5, 11, 13), notamment composants de véhicule, présentant chacun au moins une section de liaison (2, 3, 10, 12), les sections de liaison (2, 3, 10, 12) étant reliées entre elles exclusivement par l'intermédiaire d'un composant de liaison (6) constitué d'une masse de compression thermodurcissable contenant des fibres et durcie, **caractérisé en ce que** le composant de liaison (6) entoure les sections de liaison (2, 3, 10, 12) par complémentarité de forme et **en ce qu'**au moins une cavité (7) est réalisée sur au moins une section de liaison (2, 3, 10, 12), laquelle est remplie au moins partiellement avec la masse de compression thermodurcissable contenant des fibres et durcie, **caractérisé en ce que** une section de liaison (2, 3, 10, 12) est au moins partiellement entourée par la section de liaison (2, 3, 10, 12) à relier à celle-ci.

10. Ensemble (1) selon la revendication 8 ou 9, **caractérisé en ce que** la cavité (7) est réalisée sous forme de trou traversant ou de trou borgne.

11. Ensemble (1) selon la revendication 9 ou 10, **caractérisé en ce qu'**au moins une contre-dépouille (9) s'étendant transversalement à la cavité (7) est réalisée sur la cavité (7).

12. Ensemble (1) selon l'une quelconque des revendications 8 à 11, **caractérisé en ce que** les sections de liaison (2, 3, 10, 12) sont en contact physique les unes avec les autres.

13. Ensemble (1) selon l'une quelconque des revendications 8 à 11, **caractérisé en ce que** les sections de liaison (2, 3, 10, 12) sont agencées à une distance prédéterminée les unes des autres.
